# EUROPÄISCHE PATENTSCHRIFT

(11) **EP 2 993 457 B1**
(45) Veröffentlichungstag und Bekanntmachung des Hinweises auf die Patenterteilung: **02.05.2018**
(21) Anmeldenummer: 15179416.1
(22) Anmeldetag: 31.07.2015
(51) Int. Cl.: G01M 7/08, G01M 17/007

(54) **PRÜFVORRICHTUNG UND PRÜFVERFAHREN FÜR TRANSPORTIERBARE LADUNGSEINHEITEN**
TESTING DEVICE AND TESTING METHOD FOR TRANSPORTABLE CARGO UNITS
DISPOSITIF DE VERIFICATION ET PROCEDE DE VERIFICATION POUR UNITES DE CHARGE PORTATIVES

(30) Priorität: 05.09.2014 DE 102014112847
(43) Veröffentlichungstag der Anmeldung: 09.03.2016
(73) Patentinhaber: Technische Universität Darmstadt, 64289 Darmstadt (DE)
(72) Erfinder: Winner, Hermann, 76467 Bietigheim (DE); Fecher, Norbert, 63846 Laufach (DE); Klonecki, Kamil, 65934 Frankfurt am Main (DE)
(74) Vertreter: Katscher Habermann Patentanwälte

(56) Entgegenhaltungen:
- DE-A1-102011 102 443
- US-A- 3 277 697
- US-A- 3 396 947
- US-A- 3 430 481

## Beschreibung

Die Erfindung betrifft eine Prüfvorrichtung für transportierbare Ladungseinheiten mit einem auf einem Prüffeld in einer ersten Bewegungsrichtung verlagerbaren Prüfschlitten, der eine Ladungsplattform und eine Führungseinrichtung aufweist, die den Prüfschlitten auf dem Prüffeld abstützt.

Verpackte oder unverpackte Transportgüter können zu einzelnen formstabilen oder eine flexible bzw. veränderbare Formgebung aufweisende Ladungseinheiten zusammengestellt werden. Die einzelnen Ladungseinheiten können ihrerseits auf Paletten angeordnet sein. Die Transportgüter werden für einen Transportvorgang in einem Laderaum eines Transportmittels gelagert. Während eines Transports ist es zweckmäßig und oftmals notwendig, die Transportgüter in dem Laderaum zuverlässig zu fixieren und mit geeigneten Mitteln zu gewährleisten, dass die Transportgüter während des Transports nicht beschädigt werden und auch nicht das Transportmittel beschädigen. So wird beispielsweise in der Straßenverkehrsordnung gefordert, dass die Ladung einschließlich der verwendeten Geräte zur Ladungssicherung sowie Ladeeinrichtungen so zu verstauen und zu sichern sind, dass sie selbst bei Vollbremsung oder plötzlicher Ausweichbewegung nicht verrutschen, umfallen, hin- und herrollen, herabfallen oder vermeidbaren Lärm erzeugen können.

Während eines Transports wirken üblicherweise zahlreiche Bewegungskräfte auf das Transportmittel und damit auf den Laderaum und die darin befindlichen Ladungseinheiten ein. Der Laderaum wird während des Transports in verschiedenen Richtungen beschleunigt und abgebremst. Zusätzlich wirken oftmals Vibrationen und Erschütterungen sowie Stöße auf den Laderaum und die Ladungseinheiten ein. Einzelne Ladungseinheiten können während des Transports unbeabsichtigt verlagert werden oder verrutschen. Im Falle einer plötzlichen Verlagerung können Kräfte und Momente auf das Transportmittel ausgeübt werden und die Transportsicherheit beeinträchtigt werden. Mit Hilfe von geeigneten Ladungssicherungsmitteln wie beispielsweise Spanngurten oder Zurrmitteln können Ladungseinheiten in dem Laderaum festgelegt und gegen ein unbeabsichtigtes Verrutschen gesichert werden.

Um die Verkehrssicherheit zu erhöhen wurden Normen und Vorschriften entwickelt, die für unterschiedliche Ladungseinheiten eine jeweils als notwendig erachtete und geeignete Ladungssicherungen während eines Transportvorgangs vorgeben. Ein Transporteur muss für die von ihm transportierten Ladungseinheiten eine ausreichende Ladungssicherung gewährleisten, was üblicherweise durch die Einhaltung der betreffenden Vorschriften erfüllt werden kann.

Um zu ermitteln und zu überprüfen, welche Ladungssicherungen für welche Ladungseinheiten geeignet und notwendig sind, wurden verschiedene Prüfverfahren und Prüfvorrichtungen entwickelt. Mit einer in geeigneter Weise durchgeführten Prüfung kann für einzelne Ladungseinheiten der Nachweise einer ausreichenden Ladungssicherheit erbracht werden. Die einzelnen Prüfvorrichtungen sind konstruktiv aufwendig und die Durchführung einzelner Prüfungen kostenintensiv. Zudem bestehen für einige aus der Praxis bekannte Prüfverfahren erhebliche Zweifel daran, ob mit diesen Prüfverfahren ein zuverlässiger und aussagekräftiger Nachweis erbracht werden kann.

Aus der Praxis sind beispielsweise Wagen oder Schlitten bekannt, auf denen einzelne Ladungseinheiten angeordnet werden können. Die Wagen oder Schlitten werden horizontal über ein ebenes Prüffeld verlagert, wobei horizontale Beschleunigungskräfte auf die Ladungseinheiten einwirken und das Verhalten der Ladungseinheiten in Abhängigkeit von den einwirkenden Beschleunigungskräften untersucht werden kann. Derartige Wagen oder Schlitten können jedoch ausschließlich horizontal einwirkende Beschleunigungskräfte und keine vertikalen Stöße oder Vibrationen erzeugen, die bei tatsächlichen Ladungstransporten unvermeidbar auftreten und oftmals einen ganz erheblichen Einfluss auf die Ladungssicherheit ausüben. Derartige Prüfvorrichtungen sind beispielsweise in DE 10 2011 102 443 A1 oder in US 3 430 481 A beschrieben.

Es sind auch Rütteltische und Vibrationsprüfstände bekannt, bei denen eine Ladungseinheit vorgebbaren Vibrationen und Erschütterungen ausgesetzt werden kann, um das Verhalten der Ladungseinheit unter diesen Bedingungen zu untersuchen. Es hat sich jedoch gezeigt, dass kurzzeitige Krafteinwirkungen, wie sie durch Vibrationen oder Stöße erzeugt werden können, ebenfalls keine zuverlässigen Rückschlüsse auf die Ladungssicherheit bei realistischen Transportbedingungen ermöglichen. Derartige stationäre Prüfvorrichtungen sind beispielsweise in US 3 277 697 A oder US 3 396 947 A beschrieben.

Die im Straßenverkehr erforderliche und vorausgesetzte Ladungssicherheit wird deshalb in der Praxis oftmals durch realitätsnahe Fahrversuche ermittelt und überprüft, wobei ein mit Ladungseinheiten beladener Lastkraftwagen eine vorgegebene Streckenführung mit einer vorgegebenen Geschwindigkeit abfährt und das Verhalten der Ladungseinheiten in dem Laderaum untersucht wird, während die bei der Testfahrt erzeugten Beschleunigungskräfte und Erschütterungen auf den Laderaum einwirken. Die Durchführung solcher Testfahrten ist auch wegen der erforderlichen Messvorrichtungen mit erheblichen Kosten verbunden. Zudem lassen sich die verschiedenen Testfahrten nur bedingt vergleichen, da die Testergebnisse beispielsweise von den während des Testvorgangs herrschenden Umgebungsbedingungen und von einzelnen Testfahrern und Testfahrten abhängen können.

Im Gegensatz dazu bieten Prüfvorrichtungen der eingangsgenannten Gattung, bei denen ein Prüfschlitten auf einem ebenen Prüffeld horizontal verlagerbar ist, oftmals die Möglichkeit, präzise und reproduzierbare Versuchsergebnisse zu ermitteln. Die während einer Bewegung des Prüfschlittens auf dem Prüffeld erzeugten horizontalen Beschleunigungskräfte können jedoch nicht alle mechanischen Beanspruchungen simulieren, denen die Ladungseinheiten während eines Transports mit einem Transportmittel ausgesetzt sind. So hat sich beispielsweise gezeigt, dass eine Ladungseinheit, die gleichzeitig auch Vibrationen und stoßartigen Erschütterungen ausgesetzt ist, bereits bei geringeren Beschleunigungskräften verrutscht, als es ohne Vibrationen und Erschütterungen der Fall wäre.

Es wird deshalb als eine Aufgabe der vorliegenden Erfindung angesehen, eine Prüfvorrichtung der eingangs genannten Gattung so auszugestalten, dass mit möglichst geringem Aufwand möglichst realitätsnahe und aussagekräftige Prüfungen zur Ladungssicherheit von Ladungseinheiten durchgeführt werden können.

Diese Aufgabe wird erfindungsgemäß dadurch gelöst, dass die Ladungsplattform senkrecht zu der ersten Bewegungsrichtung verlagerbar an der Führungseinrichtung gelagert ist, und dass an der Ladungsplattform ein erstes Auslenkungsteil angeordnet ist, das mit einem relativ zu dem Prüffeld festgelegten zweiten Auslenkungsteil zusammenwirkt, um während einer in der ersten Bewegungsrichtung erfolgenden Verlagerung des Prüfschlittens auf dem Prüffeld eine senkrecht zu der ersten Bewegungsrichtung erfolgende Auslenkung der Ladungsplattform zu bewirken. Das erste Auslenkungsteil und das zweite Auslenkungsteil bilden dabei eine Auslenkungseinrichtung, die während einer üblicherweise horizontalen Verlagerung des Prüfschlittens eine vertikale Auslenkung der Ladungsplattform herbeiführen, so dass gleichzeitig horizontale Beschleunigungskräfte und vertikale Beschleunigungskräfte auf eine auf der Ladungsplattform befindliche Ladungseinheit einwirken können. Im Vergleich zu herkömmlichen Rütteltischen kann der Prüfschlitten horizontal über weite Strecken verlagert werden, sodass realistische Beschleunigungsvorgänge während eines Prüfvorgangs simuliert werden können. Durch die Auslenkungseinrichtung können gleichzeitig Vibrationen und Erschütterungen in vertikaler Richtung erzeugt werden, was bei herkömmlichen Prüfwaagen oder Prüfschlitten nicht oder nur mit einem erheblichen konstruktiven Aufwand möglich ist.

Für viele Anwendungsfälle ist es zweckmäßig, die erste Bewegungsrichtung und damit die Richtung der Verlagerung des Prüfschlittens auf dem Prüffeld horizontal vorzugeben und eine senkrecht dazu und damit vertikale Auslenkung der Ladungsplattform herbeizuführen, so dass im Folgenden oftmals auch sprachlich vereinfachend eine horizontale Verlagerung des Prüfschlittens und eine vertikale Auslenkung bzw. Verlagerung der Ladungsplattform beschrieben wird, ohne dadurch die Erfindung auf diese Ausrichtungen beschränken zu wollen. Die Auslenkung der Ladungsplattform muss nicht notwendigerweise senkrecht zu einer ersten Bewegungsrichtung des Prüfschlittens erfolgen, sondern lediglich eine senkrecht zu der ersten Bewegungsrichtung des Prüfschlittens gerichtete Komponente aufweisen. So könnte die Auslenkung der Ladungsplattform auch in einem vorgegebenen konstanten oder sich während des Prüfvorgangs verändernden Winkel zur ersten Bewegungsrichtung des Prüfschlittens erfolgen.

So kann es beispielsweise zweckmäßig sein, die erste Bewegungsrichtung geneigt zur Erdoberfläche vorzugeben, so dass sich der Prüfschlitten aufgrund des Eigengewichts und der Erdanziehung selbsttätig in Bewegung versetzt und in einen tiefer gelegenen Bereich des Prüffelds gleitet. Durch eine Vorgabe des Neigungswinkels und des Verlaufs der ersten Bewegungsrichtung kann die gegebenenfalls sich verändernde Beschleunigung des Prüfschlittens während seiner Verlagerung in der ersten Bewegungsrichtung vorgegeben werden.

Es ist ebenfalls möglich, dass das Prüffeld keine vollständig ebene Oberfläche aufweist und sich die erste Bewegungsrichtung während des Prüfvorgangs verändert. So kann beispielsweise entlang einer über das Prüffeld verlaufenden Trajektorie für den Prüfschlitten der Neigungswinkel dieser Trajektorie relativ zu einer horizontalen Referenzlinie unterschiedlich vorgegeben sein.

Gemäß einer Ausgestaltung des Erfindungsgedankens ist vorgesehen, dass das erste Auslenkungsteil eine Rolle mit einer in Umfangsrichtung profilierten Mantelfläche aufweist. Das erste Auslenkungsteil kann auch ein Rad oder eine Scheibe mit einer nicht kreisförmigen Umfangskontur sein. Eine Oberfläche des Prüffelds kann das zweite Auslenkungsteil bilden, auf dem die an der Ladungsplattform festgelegte Rolle während einer Verlagerung des Prüfschlittens abrollt. Die Rolle kann in Umfangsrichtung regelmäßig oder auch unregelmäßig angeordnete Ausformungen und Vertiefungen aufweisen, sodass die mit der Rolle verbundene Ladungsplattform während einer in der ersten Bewegungsrichtung beispielsweise horizontal erfolgenden Verlagerung des Prüfschlittens in einer dazu senkrechten Richtung und damit beispielsweise vertikal angehoben und abgesenkt wird. Auf diese Weise kann äußerst kostengünstig eine vertikale Verlagerung der Ladungsplattform während einer horizontalen Bewegung erzwungen werden.

Die in Umfangsrichtung an dem Rad oder an der Rolle angeordneten Ausformungen und Vertiefungen können eine unterschiedliche Formgebung aufweisen, sodass jeweils unterschiedliche vertikale Beschleunigungskräfte auf die Ladungsplattform ausgeübt werden.

Es ist ebenfalls möglich, dass das zweite Auslenkungsteil eine sich in der ersten Bewegungsrichtung erstreckende und in vertikaler Richtung ausgebildete Auslenkkontur aufweist, die eine Auslenkung des ersten Auslenkteils während einer Verlagerung des Prüfschlittens in der ersten Bewegungsrichtung bewirkt. Das erste Auslenkteil kann eine Rolle oder ein Rad mit einer kreisförmigen Umfangskontur aufweisen, so dass während einer beispielsweise horizontalen Verlagerung des Prüfschlittens das erste Auslenkungsteil auf der Auslenkkontur des zweiten Auslenkungsteils abrollt. Es ist ebenfalls denkbar, dass das erste Auslenkungsteil eine beispielsweise nockenförmige Gleitfläche aufweist, die während einer horizontalen Verlagerung des Prüfschlittens auf der Auslenkkontur entlanggeführt wird und eine entsprechende vertikale Auslenkung der Ladungsplattform bewirkt. Zu diesem Zweck weist die Auslenkkontur eine Auslenkoberfläche auf, über die das erste Auslenkungsteil hinweg bewegt wird.

Bei einer derartigen Ausgestaltung der Auslenkungseinrichtung mit einer Auslenkoberfläche können vor allem senkrecht zu der ersten Bewegungsrichtung von dem Prüffeld weg gerichtete Stöße sowie Vibrationen erzeugt werden. Durch das Eigengewicht des Prüfschlittens sowie durch das Gewicht der auf der Ladungsplattform angeordneten Ladungseinheiten wird die Ladungsplattform bei einer Verlagerung des Prüfschlittens über ein horizontal ausgerichtetes Prüffeld nach jeder vertikal nach oben gerichteten Auslenkung wieder nach unten zu dem Prüffeld hin beschleunigt.

Um sowohl nach oben wie auch nach unten gerichtete vertikale Beschleunigungskräfte auf die Ladungsplattform ausüben zu können ist vorgesehen, dass die Auslenkkontur durch eine Auslenkungsnut gebildet wird, mit der das erste Auslenkteil in Eingriff steht. Das erste Auslenkungsteil kann beispielsweise einen seitlich vorspringenden und in die Auslenkung tragenden Führungszapfen aufweisen. Der Führungszapfen folgt während einer horizontalen Verlagerung dem Verlauf der Auslenkungsnut und wird dabei entsprechend dem Verlauf der Auslenkungsnut abwechselnd nach oben und nach unten verlagert bzw. beschleunigt.

Es ist grundsätzlich möglich und insbesondere bei großen Prüfschlitten sowie bei Ladungseinheiten mit einem großen Eigengewicht zweckmäßig, dass mehrere erste Auslenkungsteile über eine Unterseite der Ladungsplattform verteilt an der Ladungsplattform angeordnet sind. Die ersten Auslenkungsteile und die mit den ersten Auslenkungsteilen zusammenwirkenden zweiten Auslenkungsteile können synchronisiert und aufeinander abgestimmt sein, sodass die Ladungsplattform durch die mehreren Auslenkungsteile gleichmäßig vertikal ausgelenkt wird. Es ist jedoch ebenso möglich und im Hinblick auf eine möglichst realistische Durchführung des Prüfvorgangs vorteilhaft, dass mehrere Auslenkungsteile mit einer unterschiedlichen, bzw. nicht relativ zueinander synchronisierten Formgebung an der Ladungsplattform beabstandet zueinander angeordnet sind, sodass an unterschiedlichen Bereichen der Ladungsplattform verschiedene vertikale Auslenkungen erzeugt werden können. Auf diese Weise können nahezu aus beliebiger Richtung auf die Ladungsplattform einwirkende Beschleunigungskräfte und Momente erzeugt werden.

Es ist vorgesehen, dass die Ladungsplattform über Luftfedern an der Führungseinrichtung gelagert ist. Durch die Verwendung von Luftfedern werden bei einer Auslenkung der Ladungsplattform relativ zu der Führungseinrichtung lediglich geringe Momente auf die Ladungsplattform übertragen. Umgekehrt werden während der Durchführung eines Prüfvorgangs auch von der Plattform keine oder lediglich geringe Momente auf die Führungseinheit übertragen. Dadurch kann die Führungseinheit deutlich kleiner und leichter als bei Verwendung anderer Lagereinrichtungen ausgeführt werden. Durch geeignete Führungselemente kann gewährleistet werden, dass die Luftfedern bei den horizontal auf den Prüfschlitten einwirkenden Beschleunigungskräften nicht übermäßig beansprucht werden.

Um die horizontale Verlagerung des Prüfschlittens möglichst präzise vorgeben zu können ist vorgesehen, dass die Führungseinrichtung mindestens ein Schienenführungsteil aufweist, welches mit einer auf dem Prüffeld verlaufenden Führungsschiene zusammenwirkt. Es ist grundsätzlich möglich, dass der Prüfschlitten ein oder mehrere Seitenführungsteile aufweist, die seitlich vorspringen und mit einer ebenfalls seitlich neben der vorgesehenen horizontalen Bewegungsrichtung des Prüfschlittens verlaufenden Führungsschiene in Eingriff stehen.

Gemäß einer äußerst vorteilhaften Ausgestaltung des Erfindungsgedankens ist vorgesehen, dass zwei parallel nebeneinander angeordnete Führungsschienen auf dem Prüffeld angeordnet sind, und dass der Prüfschlitten an der Unterseite der Ladungsplattform angeordnete Schienenführungsteile entlang den Führungsschienen rollend oder gleitend verlagert werden kann. Die Schienenführungsteile können beispielsweise einen verdickten Schienenkopf der Führungsschienen umgreifen oder hintergreifen, um eine formschlüssige Lagerung des Prüfschlittens auf den Führungsschienen und dessen exakte Führung über das Prüffeld zu ermöglichen. Die Schienenführungsteile können weiterhin Rollen oder Gleitflächen aufweisen, um eine möglichst reibungsarme und leichtgängige Verlagerung des Prüfschlittens über die Führungsschienen zu begünstigen.

Zweckmäßigerweise ist vorgesehen, dass die Prüfvorrichtung eine Antriebseinrichtung aufweist, die mit dem Prüfschlitten verbunden ist. Für einfache Prüfvorgänge ist es grundsätzlich denkbar, dass der Prüfschlitten entweder manuell angeschoben oder aber auf eine schräge Ebene gelagert ist und auf Grund seines Eigengewichts mit zunehmender Geschwindigkeit die schräge Ebene hinab gleitet oder hinab rollt. Um möglichst reproduzierbare horizontale Verlagerungen des Prüfschlittens zu ermöglichen, bei denen die jeweils auftretenden horizontalen Beschleunigungskräfte präzise vorgegeben werden können, ist es vorteilhaft, dass der Prüfschlitten mit einer steuerbaren oder regelbaren Antriebseinrichtung verbunden ist und über diese Antriebseinrichtung kontrolliert verlagert werden kann.

Erfindungsgemäß ist vorgesehen, dass die Antriebseinrichtung eine Seiltriebeinrichtung mit einem Antriebsseil aufweist, dass mit dem Prüfschlitten verbunden ist. Die Seiltriebeinrichtung kann beispielsweise eine Seiltrommel aufweisen, auf welche das mit dem Prüfschlitten verbundene Antriebsseil aufgewickelt werden kann, wobei durch die Verkürzung des losen und noch nicht aufgewickelten Endes des Antriebsseils der Prüfschlitten gezogen und beschleunigt wird. Zweckmäßigerweise ist vorgesehen, dass die Seiltriebeinrichtung zwei Antriebsseile aufweist, die an entgegengesetzten Stirnseiten mit dem Prüfschlitten verbunden sind und in entgegengesetzte Richtungen verlagert, bzw. aufgerollt werden können. Durch eine synchronisierte Betätigung der beiden Antriebsseile kann eine Beschleunigung und Verzögerung des Prüfschlittens in der durch die Führungseinrichtung vorgegebenen Verlagerungsrichtung vorgegeben werden. Auf diese Weise kann der Prüfschlitten auf den Führungsschienen in beide Richtungen verlagert und nach Belieben beschleunigt bzw. verzögert werden.

Es ist ebenfalls möglich und für verschiedene Prüfungsvorgänge zweckdienlich, dass die Antriebseinrichtung einen doppelt bzw. in zwei entgegengesetzte Richtungen wirkenden Hydraulikzylinder oder zwei in entgegengesetzte Richtungen betätigbare Hydraulikzylinder aufweist, die über eine Kopplungseinrichtung mit einer Stirnfläche des Prüfschlittens verbunden sind.

Um zu vermeiden, dass über die Antriebseinrichtung unerwünschte Momente auf den Prüfschlitten übertragen werden, kann vorgesehen sein, dass die Antriebseinrichtung in vertikaler Richtung beabstandet zu einer Ladefläche der Ladungsplattform mit dem Prüfschlitten verbunden ist. So kann beispielsweise an einer der Antriebseinrichtung zugeordneten Stirnseite eine Halteeinrichtung oder ein Halterahmen vorgesehen sein, welcher in vertikaler Richtung über die Ladefläche der Ladungsplattform vorspringt und an dem die Antriebseinrichtung beabstandet zu der Ladefläche angekoppelt werden kann. Durch einen in geeigneter Weise vorgegebenen vertikalen Versatz der Wirkverbindung der Antriebseinrichtung zu der Ladungsplattform können bei einer Beschleunigung des Prüfschlittens absichtlich Momente erzeugt werden, um die aus den Trägheitskräften resultierenden Momente teilweise oder vollständig zu kompensieren.

Um kontinuierlich regelmäßige Vibrationen und Erschütterungen auf die Ladungseinheiten ausüben zu können ist erfindungsgemäß vorgesehen, dass der Prüfschlitten mindestens einen Unwuchtmotor aufweist, mit welchem eine Schwingungsauslenkung der Ladungsplattform erzeugt werden kann. Ein geeigneter Unwuchtmotor kann mit ausreichender Leistung und gleichzeitig geringem Raumbedarf und Eigengewicht an dem Prüfschlitten angeordnet sein, sodass bei einem Betrieb des Unwuchtmotors die Ladungsplattform den durch den Unwuchtmotor erzeugten Vibrationen und Erschütterungen ausgesetzt ist. Auf diese Weise kann kostengünstig und mit geringem Gewicht eine regelmäßige Vibration und Erschütterung der auf dem Prüfschlitten befindlichen Ladungseinheiten simuliert werden. Die durch den Unwuchtmotor erzeugten Vibrationen und Erschütterungen können zusätzlich zu den mit der Auslenkungseinrichtung erzwungenen vertikalen Auslenkungen auf die Ladungsplattform und damit auf die darauf angeordneten Ladungseinheiten ausgeübt werden.

Die Erfindung betrifft auch das Verfahren zur Durchführung eines Prüfvorgangs zur Ladungssicherheit von transportierbaren Ladungseinheiten, wobei ein Prüfschlitten auf einem Prüffeld in einer ersten Bewegungsrichtung verlagert wird. Erfindungsgemäß und mit Verweis auf die vorausgegangenen Ausführungen ist vorgesehen, dass die transportierbaren Ladungseinheiten auf einer an dem Prüfschlitten gelagerten Ladungsplattform angeordnet werden und die Ladungsplattform während der Durchführung des Prüfvorgangs senkrecht zu der ersten Bewegungsrichtung des Prüfschlittens ausgelenkt wird, um während der Durchführung des Prüfvorgangs sowohl horizontale als auch vertikale Beschleunigungskräfte auf eine auf der Ladungsplattform befindliche Ladungseinheit auszuüben.

Um auch einen Einfluss der Ladungssicherung auf die Ladungssicherheit zu erfassen ist vorgesehen, dass eine auf der Ladungsplattform befindliche Ladungseinheit während der Durchführung des Prüfvorgangs mit mindestens einem Gerät zur Ladungssicherung auf der Ladungsplattform festgelegt ist.

Mit der erfindungsgemäßen Prüfvorrichtung können mit einfachen konstruktiven Mitteln und äußerst kostengünstig Prüfverfahren durchgeführt werden, bei denen die auf der Ladungsplattform angeordneten Ladungseinheiten horizontalen Beschleunigungen und gleichzeitig vertikalen Vibrationen und Erschütterungen ausgesetzt werden kann, um das Verhalten der Ladungseinheiten auf der Ladefläche der Ladungsplattform realitätsnah zu untersuchen und zu überprüfen. Die Prüfvorrichtung bietet die Möglichkeit der Anbringung von verschiedenen Sicherungsmitteln wie beispielsweise Zurrgurte oder Zurrketten, Sperrbalken oder Netze, mit denen einzelne oder mehrere Ladungseinheiten auf dem Prüfschlitten bzw. auf der Ladungsplattform zusätzlich festgelegt und gesichert werden können. Damit können nicht nur einzelne Ladungseinheiten und deren Verhalten, sondern auch die verschiedenen Möglichkeiten einer zusätzlichen Ladungssicherung untersucht werden.

Nachfolgend werden einige Ausführungsbeispiele des Erfindungsgedankens näher erläutert, die in der Zeichnung dargestellt sind. Es zeigt:
Figur 1 eine schematische und perspektivische Ansicht eines Prüfschlittens, der auf zwei Führungsschienen horizontal verlagerbar gelagert ist,
Figur 2 eine schematische Schnittansicht längs der Linie II-II in Figur 1 des in Figur 1 dargestellten Prüfschlittens in einem Bereich um die Führungsschienen,
Figur 3 eine schematische Schnittansicht eines Teilbereichs des Prüfschlittens längs der Linie III-III in Figur 2, in dem ein erstes Auslenkungsteil an der Ladungsplattform des Prüfschlittens angeordnet ist und mit einem zweiten, auf dem Prüffeld festgelegten Auslenkungsteil zusammenwirkt,
Figur 4 eine schematische Schnittansicht gemäß Figur 3, wobei ein abweichend ausgestaltetes erstes Auslenkungsteil an der Ladungsplattform mit einem ebenfalls abweichend ausgestalteten zweiten Auslenkungsteil auf dem Prüffeld zusammenwirkt, und
Figur 5 eine schematische Schnittansicht gemäß den Figuren 3 und 4 einer wiederum abweichend ausgestalteten Auslenkungsanordnung mit einem an der Ladungsplattform festgelegten ersten Auslenkungsteil, das formschlüssig mit einer auf dem Prüffeld festgelegten und sich horizontal erstreckenden Auslenkungsnut in Eingriff steht.

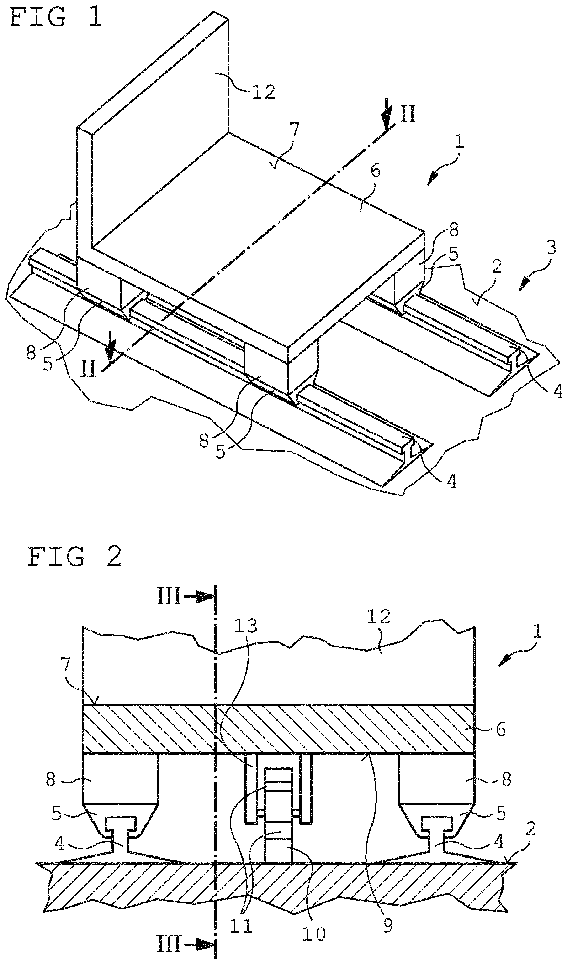

Ein in den Figuren 1 und 2 schematisch dargestellter Prüfschlitten 1 ist horizontal verlagerbar auf zwei parallel zueinander ausgerichteten und horizontal auf einer Oberfläche 2 eines Prüffelds 3 angeordneten Führungsschienen 4 gelagert. Der Prüfschlitten 1 weist zu diesem Zweck vier Schienenführungsteile 5 auf, die an den vier Ecken des Prüfschlittens 1 angeordnet sind und jeweils mit der zugeordneten Führungsschiene 4 in einem formschlüssigen Eingriff stehen. Zu diesem Zweck umgreifen Ausformungen der Schienenführungsteile 5 jeweils parallel zu der Oberfläche 2 des Prüffelds 3 auskragende verdickte Schienenköpfe der Führungsschienen 4.

Eine Ladungsplattform 6 mit einer ebenen Ladefläche 7 ist über lediglich schematisch dargestellte Luftfedereinrichtungen 8 an den Schienenführungsteilen 5 gelagert. Die Luftfedereinrichtungen 8 erlauben eine nahezu momentenfreie Verlagerung der Ladungsplattform 6 in vertikaler Richtung relativ zu den Schienenführungsteilen 5 und damit zu dem Prüffeld 3 und den darauf angeordneten Führungsschienen 4.

An einer Unterseite 9 der Ladungsplattform 6 ist ein Laufrad 10 so angeordnet, dass das Laufrad 10 bei einer Verlagerung des Prüfschlittens 1 in horizontaler Richtung entlang den Führungsschienen 4 auf der Oberfläche 2 des Prüffelds 3 abrollt. Das Laufrad 10 weist eine unregelmäßige Umfangskontur mit unterschiedlich ausgestalteten und radial vorspringenden Ausformungen 11 auf. Wenn bei einer Verlagerung des Prüfschlittens 1 längs der Führungsschienen 4 und einem entsprechenden Abrollvorgang des Laufrads 10 eine radial vorspringende Ausformung 11 des Laufrads 10 über die Oberfläche 2 des Prüffelds 3 bewegt wird, erzwingt diese Ausformung 11 eine vertikale Auslenkung der Ladungsplattform 6. In Abhängigkeit von der horizontalen Verlagerungsgeschwindigkeit des Prüfschlittens 1 führt die Ausformung 11 des Laufrads 10 während eines Abrollvorgangs zu einer stoßartigen vertikalen Auslenkung der Ladungsplattform 6.

Auf der Ladefläche 7 der Ladungsplattform 6 können in den Figuren 1 und 2 nicht dargestellte Ladungseinheiten angeordnet und mit den für den jeweiligen Prüfvorgang vorgesehenen Ladungssicherungsmitteln fixiert werden. Auf der Ladefläche 7 der Ladungsplattform 6 sowie an einer vertikal vorspringenden Rückwand 12 der Ladungsplattform 6 können zahlreiche ebenfalls nicht dargestellte Messaufnehmer angeordnet sein, mit denen die von den auf der Ladungsplattform 6 angeordneten Ladungseinheiten auf die Ladefläche 7 und auf die Rückwand 12 ausgeübten Kräfte während der Durchführung eines Prüfvorgangs gemessen und für eine anschließende Auswertung zur Verfügung gestellt werden können.

Zusätzlich kann beispielsweise mit Filmkameras oder mit Hochgeschwindigkeitskameras das Verhalten der Ladungseinheiten auf der Ladefläche 7 der Ladungsplattform 6 während der Durchführung eines Prüfvorgangs aufgezeichnet werden.

Es ist ebenfalls möglich, nach dem Abschluss eines Prüfvorgangs die auf der Ladefläche 7 der Ladungsplattform 6 angeordneten Ladungseinheiten auf mechanische Beanspruchungen und gegebenenfalls auf eine Beschädigung hin zu untersuchen.

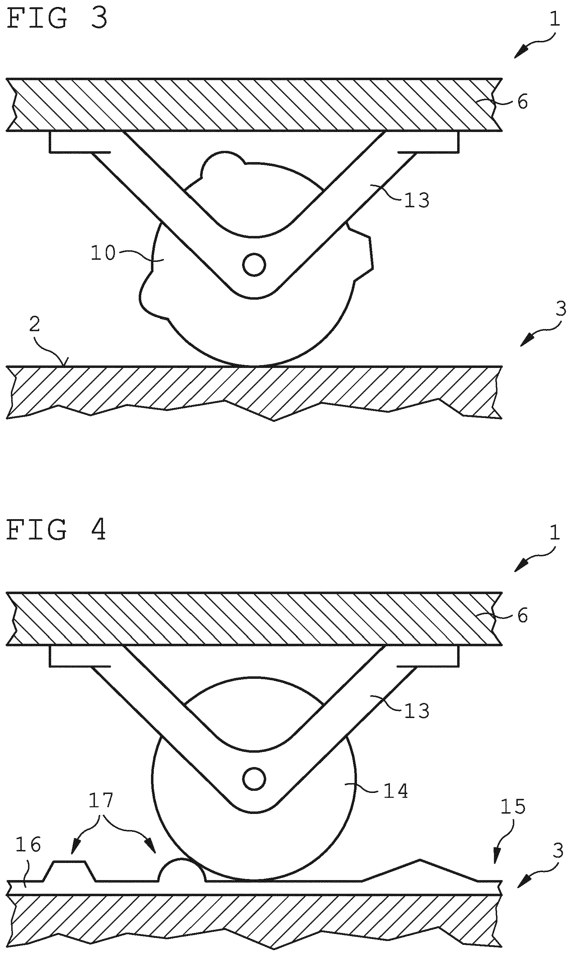

In Figur 3 ist der in den Figuren 1 und 2 dargestellte Prüfschlitten 1 in einer vergrößerten Teilansicht in einem Bereich um das Laufrad 10 dargestellt. Das Laufrad 10 ist über eine bügelförmige Haltereinrichtung 13 in einem vorgegebenen Abstand zu der Unterseite 9 der Ladungsplattform 6 drehbar an der Ladungsplattform 6 gelagert. Das Laufrad 10 bildet zusammen mit der Halteeinrichtung 13 das erste Auslenkungsteil. Die ebene Oberfläche 2 des Prüffelds 3 bildet das zweite Auslenkungsteil, das mit dem ersten Auslenkungsteil zusammenwirkt und eine vertikale Verlagerung der Ladungsplattform 6 während einer horizontalen Verlagerung des Prüfschlittens 1 über die Oberfläche 2 des Prüffelds 3 erzwingt. Es sind keine aufwendigen, kostenintensiven und fehleranfälligen Aktoren erforderlich, mit denen eine vertikale Verlagerung der Ladungsplattform 6 während einer horizontalen Verlagerung entlang der Führungsschienen 4 bewirkt werden kann.

Die Haltereinrichtung 13 und das Laufrad 10 können beispielsweise aus einem Leichtmetall oder aus einem ausreichend mechanisch beanspruchbaren Kunststoff hergestellt sein, sodass sich das Eigengewicht des Prüfschlittens 1 durch die Befestigung des ersten Auslenkungsteils an der Ladungsplattform 6 nicht nennenswert vergrößert.

In Figur 4 ist ebenfalls schematisch eine abweichende Ausgestaltung des ersten Auslenkungsteils und des zweiten Auslenkungsteils einer in den Figuren 1 und 2 dargestellten Prüfvorrichtung gezeigt. Das Laufrad 14 weist eine kreisrunde Umfangskontur auf. Auf der Oberfläche 2 des Prüffelds 3 ist in horizontaler Richtung parallel zu den Führungsschienen 4 ein zweites Auslenkungsteil 15 mit einer von der Oberfläche 2 des Prüffelds 3 nach oben vorspringenden Auslenkungskontur 16 festgelegt. Die mit unregelmäßig ausgeformten Erhebungen 17 versehene Auslenkungskontur 16 erzwingt eine vertikale Verlagerung des über die Auslenkungskontur 16 abrollenden Laufrads 10 während einer horizontalen Verlagerung des Prüfschlittens 1 entlang der Führungsschienen 4. Auf diese Weise kann eine unregelmäßige vertikale Auslenkung der Ladungsplattform 6 relativ zu der ebenen Oberfläche 2 des Prüffelds 3 erzwungen werden.

Die Auslenkungskontur 16 des zweiten Auslenkungsteils 15 kann sich über einen vollständigen Durchmesser des Prüffelds 3 erstrecken, so dass unregelmäßige Auslenkungen über die gesamte Länge der Auslenkungskontur 16 verteilt erzeugt werden können und die unregelmäßigen Auslenkungen nicht auf einen Umfang des Laufrads 10 beschränkt sind.

Zweckmäßigerweise ist vorgesehen, dass sich das zweite Auslenkungsteil 15 über den gesamten Verfahrweg des Prüfschlittens 1 auf den Führungsschienen 4 erstreckt. Es ist ebenfalls möglich, dass das zweite Auslenkungsteil 15 einen ausreichend großen Bereich des Prüffelds 3 linienförmig abdeckt, aber beabstandet zu dem zweiten Auslenkungsteil 15 keine nennenswerte vertikale Verlagerung der Ladungsplattform 6 erfolgt, während durch ein Zusammenwirken des an der Ladungsplattform 6 angeordneten ersten Auslenkungsteils und des auf dem Prüffeld zumindest in einem Bereich in der Nähe der Führungsschienen 4 angeordneten zweiten Auslenkungsteils eine entsprechende vertikale Auslenkung der Ladungsplattform 6 erzwungen wird.

Das zweite Auslenkungsteil 15 kann entweder als separates Bauteil parallel zu den Führungsschienen 4 auf der Oberfläche 2 des Prüffelds 3 angeordnet und festgelegt sein. Es ist ebenfalls möglich, dass das zweite Auslenkungsteil 15 als Bestandteil einer Führungsschiene 4 oder der beiden Führungsschienen 4 ausgebildet ist.

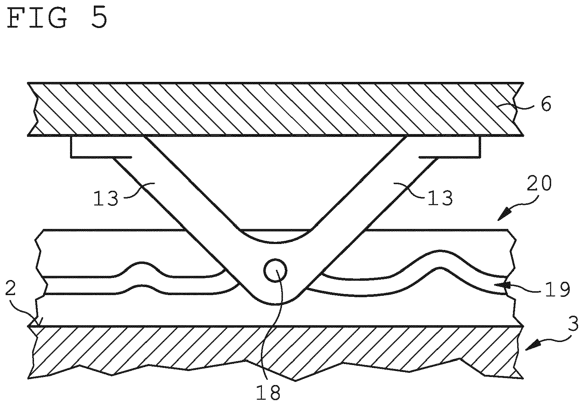

In Figur 5 ist lediglich exemplarisch ein weiteres Ausführungsbeispiel der Auslenkungseinrichtung des Prüfschlittens 1 dargestellt. An der Haltereinrichtung 13, die an der Unterseite 9 der Ladungsplattform 6 befestigt ist, ist ein seitlich abstehender Führungszapfen 18 festgelegt. Der Führungszapfen 18 steht in Eingriff mit einer Auslenkungsnut 19, die in einem schienenförmig ausgestalteten zweiten Auslenkungsteil 20 parallel zu den Führungsschienen 4 auf der Oberfläche 2 des Prüffelds 3 festgelegt ist. Das zweite Auslenkungsteil 20 kann auch ein geeignet ausgestalteter Abschnitt einer Führungsschiene 4 sein. Durch den formschlüssigen Eingriff des Führungszapfens 18 mit der Auslenkungsnut 19 können sowohl nach oben gerichtete als auch nach unten gerichtete vertikale Auslenkungen der Ladungsplattform 6 relativ zu der Oberfläche 2 des Prüffelds 3 erzwungen werden. An Stelle des Führungszapfens 18 kann auch eine drehbar gelagerte Führungsrolle vorgesehen sein und mit der Auslenkungsnut 19 in Eingriff stehen.

## Patentansprüche

1. Prüfvorrichtung für transportierbare Ladungseinheiten, wobei mit der Prüfvorrichtung das Verhalten der Ladungseinheiten in Abhängigkeit von den einwirkenden Beschleunigungskräften untersucht werden kann, um zu ermitteln und zu überprüfen, welche Ladungssicherungen für welche Ladungseinheiten geeignet und notwendig sind, mit einem auf einem Prüffeld (3) in einer ersten Bewegungsrichtung verlagerbaren Prüfschlitten (1), der eine Ladungsplattform (6) und eine Führungseinrichtung aufweist, die den Prüfschlitten (1) auf dem Prüffeld (3) abstützt, **dadurch gekennzeichnet, dass** die Ladungsplattform (6) senkrecht zu der ersten Bewegungsrichtung verlagerbar an der Führungseinrichtung gelagert ist, und dass an der Ladungsplattform (6) ein erstes Auslenkungsteil angeordnet ist, das mit einem relativ zu dem Prüffeld (3) festgelegten zweiten Auslenkungsteil (15, 20) zusammenwirkt, um während einer in der ersten Bewegungsrichtung erfolgenden Verlagerung des Prüfschlittens (1) auf dem Prüffeld (3) eine senkrecht zu der ersten Bewegungsrichtung erfolgende Auslenkung der Ladungsplattform (6) zu bewirken.

2. Prüfvorrichtung nach Anspruch 1, **dadurch gekennzeichnet, dass** das erste Auslenkungsteil eine Rolle mit einer in Umfangsrichtung profilierten Mantelfläche aufweist.

3. Prüfvorrichtung nach Anspruch 1, **dadurch gekennzeichnet, dass** das zweite Auslenkungsteil (15) eine in der ersten Bewegungsrichtung angeordnete Auslenkkontur (16) aufweist, die eine Auslenkung des ersten Auslenkungsteils während einer Verlagerung des Prüfschlittens (1) in der ersten Bewegungsrichtung bewirkt.

4. Prüfvorrichtung nach Anspruch 3, **dadurch gekennzeichnet, dass** die Auslenkungskontur (16) eine Auslenkoberfläche aufweist, über die das zweite Auslenkteil (15) bewegt wird.

5. Prüfvorrichtung nach Anspruch 3, **dadurch gekennzeichnet, dass** die Auslenkkontur (16) durch eine Auslenknut (19) gebildet wird, mit welcher das erste Auslenkungsteil in Eingriff steht.

6. Prüfvorrichtung nach einem der vorangehenden Ansprüche, **dadurch gekennzeichnet, dass** die Ladungsplattform (6) über Luftfedereinrichtungen (8) an der Führungseinrichtung gelagert ist.

7. Prüfvorrichtung nach einem der vorangehenden Ansprüche, **dadurch gekennzeichnet, dass** die Führungseinrichtung mindestens ein Schienenführungsteil (5) aufweist, welches mit einer auf dem Prüffeld (3) verlaufenden Führungsschiene (4) zusammenwirkt.

8. Prüfvorrichtung nach einem der vorangehenden Ansprüche, **dadurch gekennzeichnet, dass** die Prüfvorrichtung eine Antriebseinrichtung aufweist, die mit dem Prüfschlitten (1) verbunden ist.

9. Prüfvorrichtung nach Anspruch 8, **dadurch gekennzeichnet, dass** die Antriebseinrichtung eine Seiltriebeinrichtung mit einem Antriebsseil aufweist.

10. Prüfvorrichtung nach Anspruch 8, **dadurch gekennzeichnet, dass** die Antriebseinrichtung mindestens einen betätigbaren Hydraulikzylinder aufweist.

11. Prüfvorrichtung nach einem der Ansprüche 8 bis 10, **dadurch gekennzeichnet, dass** die Antriebseinrichtung in einer senkrecht zu der ersten Bewegungsrichtung verlaufenden Richtung beabstandet zu einer Ladefläche (7) der Ladungsplattform (6) mit dem Prüfschlitten (1) verbunden ist.

12. Prüfvorrichtung nach Anspruch 11, **dadurch gekennzeichnet, dass** ein Abstand senkrecht zu der ersten Bewegungsrichtung zwischen einer Wirkverbindung der Antriebseinrichtung mit dem Prüfschlitten und der Ladungsplattform vorgebbar ist.

13. Prüfvorrichtung nach einem der vorangehenden Ansprüche, **dadurch gekennzeichnet, dass** der Prüfschlitten (1) mindestens einen Unwuchtmotor aufweist, mit welchem eine vertikale Schwingungsauslenkung der Ladungsplattform (6) erzeugt werden kann.

14. Verfahren zur Durchführung eines Prüfvorgangs zur Ladungssicherheit von transportierbaren Ladungseinheiten während eines Transportvorgangs, wobei ein Prüfschlitten (1) auf einem Prüffeld (3) in einer ersten Bewegungsrichtung verlagert wird, um das Verhalten der Ladungseinheiten in Abhängigkeit von den einwirkenden Beschleunigungskräften zu untersuchen und um ermitteln und überprüfen zu können, welche Ladungssicherungen für welche Ladungseinheiten geeignet und notwendig sind, **dadurch gekennzeichnet, dass** die transportierbaren Ladungseinheiten auf einer an dem Prüfschlitten (1) gelagerten Ladungsplattform (6) angeordnet werden und die Ladungsplattform (6) während der Durchführung des Prüfvorgangs senkrecht zu der ersten Bewegungsrichtung des Prüfschlittens (1) ausgelenkt wird, um während der Durchführung des Prüfvorgangs sowohl horizontale als auch vertikale Beschleunigungskräfte auf eine auf der Ladungsplattform (6) befindliche Ladungseinheit auszuüben.

15. Verfahren nach Anspruch 14, **dadurch gekennzeichnet, dass** eine auf der Ladungsplattform (6) befindliche Ladungseinheit während der Durchführung des Prüfvorgangs mit mindestens einem Gerät zur Ladungssicherung, nämlich mit Ladungssicherungsmitteln wie beispielsweise Spanngurten oder Zurrmitteln, auf der Ladungsplattform (6) festgelegt ist, um einen Einfluss der Ladungssicherung auf die Ladungssicherheit zu erfassen.

## Claims

1. Test device for transportable load units, wherein the behavior of the load units can be examined with the test device depending on acting acceleration forces, in order to determine and verify which loading securing devices are suitable and necessary for load units, with a test sled (1) displaceable in a first movement direction on a test field (3), which comprises a loading platform (6) and a guiding device, which supports the test sled (1) on the test field (3), **characterized in that** the loading platform (6) is mounted on the guiding device displaceably perpendicular to the first movement direction, and **in that** a first deflection part is arranged on the loading platform (6), which cooporates with a second deflection part (15, 20) fixed relative to the test field (3), in order, during a displacement of the test sled (1) on the test field (3) occurring in the first movement direction, to effect a deflection of the loading platform (6) occurring perpendicular to the first movement direction.

2. Test device according to claim 1, **characterized in that** the first deflection part comprises a roller with a shell surface profiled in a circumferential direction.

3. Test device according to claim 1, **characterized in that** the second deflection part (15) has a deflection contour (16) arranged in the first movement direction, which effects a deflection of the first deflection part during a displacement of the test sled (1) in the first movement direction.

4. Test device according to claim 3, **characterized in that** the deflection contour (16) comprises a deflection surface, via which the second deflection part (15) is moved.

5. Test device according to claim 3, **characterized in that** the deflection contour (16) is formed by a deflection groove (19), with which the first deflection part is engaged.

6. Test device according to one of the preceding claims, **characterized in that** the loading platform (6) is mounted on the guiding device via air spring devices (8).

7. Test device according to one of the preceding claims, **characterized in that** the guiding device has at least one rail guide part (5), which corporates with a guide rail (4) running on the test field (3).

8. Test device according to one of the preceding claims, **characterized in that** the test device has a drive device, which is connected to the test sled (1).

9. Test device according to claim 8, **characterized in that** the drive device has a cable drive device with a drive cable.

10. Test device according to claim 8, **characterized in that** the drive device has at least one operable hydraulic cylinder.

11. Test device according to one of the claims 8 to 10, **characterized in that** the drive device is connected with the test sled (1), spaced apart from a loading surface (7), in a direction running perpendicular to the first movement direction.

12. Test device according to claim 11, **characterized in that** a distance perpendicular to the first movement direction between an operative connection of the drive device with the test sled and the loading platform can be predetermined.

13. Test device according to one of the preceding claims, **characterized in that** the test sled (1) comprises at least one unbalance motor, with which a vertical oscillation deflection of the loading platform (6) can be generated.

14. Method for carrying out a test procedure for the loading security of transportable load units during a transport procedure, wherein a test sled (1) is displaced in a first movement direction on a test field (3), in order to examine the behavior of the load units depending on the acting acceleration forces, and in order to be able to determine and verify which loading securing devices are suitable and necessary for which load units, **characterized in that** the transportable load units are arranged on a loading platform (6) mounted on the test sled (1) and the loading platform (6) is deflected perpendicular to the first movement direction of the test sled (1) during the execution of the test procedure, in order to exert horizontal as well as perpendicular acceleration forces on a load unit located on the loading platform (6) during the execution of the test procedure.

15. Method according to claim 14, **characterized in that**, during the execution of the test procedure, a load unit located on the loading platform (6) is secured on the loading platform (6) with at least one device for the securing a load, namely with loading securing means such as, for example, tensioning straps or lashing means, in order to identify the influence of the loading securing device on the loading safety.

## Revendications

1. Dispositif de contrôle pour des unités de chargement transportables, le comportement des unités de chargement en fonction des forces d'accélération agissant pouvant être examiné à l'aide du dispositif de contrôle afin de déterminer et de vérifier quelles sécurités de chargement sont aptes et nécessaires à quelles unités de chargement, comprenant un chariot de contrôle (1) déplaçable dans une première direction de déplacement sur un champ de contrôle (3), lequel chariot de contrôle présente une plateforme de chargement (6) et un dispositif de guidage qui soutient le chariot de contrôle (1) sur le champ de contrôle (3), **caractérisé en ce que** la plateforme de chargement (6) est logée sur le dispositif de guidage de manière déplaçable perpendiculairement à la première direction de déplacement, et **en ce que** sur la plateforme de chargement (6) est disposée une première pièce de déviation qui coopère avec une deuxième pièce de déviation (15, 20) fixée de manière relative par rapport au champ de contrôle (3), afin, pendant un déplacement, ayant lieu dans la première direction de déplacement, du chariot de contrôle (1) sur le champ de contrôle (3), de causer une déviation de la plateforme de chargement (6) ayant lieu perpendiculairement à la première direction de déplacement.

2. Dispositif de contrôle selon la revendication 1, **caractérisé en ce que** la première pièce de déviation présente un galet ayant une surface d'enveloppe profilée dans le sens circonférentiel.

3. Dispositif de contrôle selon la revendication 1, **caractérisé en ce que** la deuxième pièce de déviation (15) présente un contour de déviation (16) disposé dans la première direction de déplacement, lequel contour cause une déviation de la première pièce de déviation pendant un déplacement du chariot de contrôle (1) dans la première direction de déplacement.

4. Dispositif de contrôle selon la revendication 3, **caractérisé en ce que** le contour de déviation (16) présente une surface de déviation par l'intermédiaire de laquelle la deuxième pièce de déviation (15) est déplacée.

5. Dispositif de contrôle selon la revendication 3, **caractérisé en ce que** le contour de déviation (16) est formé par une rainure de déviation (19) avec laquelle la première pièce de déviation est en prise.

6. Dispositif de contrôle selon l'une quelconque des revendications précédentes, **caractérisé en ce que** la plateforme de chargement (6) est logée sur le dispositif de guidage par l'intermédiaire de dispositifs à ressorts pneumatiques (8).

7. Dispositif de contrôle selon l'une quelconque des revendications précédentes, **caractérisé en ce que** le dispositif de guidage présente au moins une pièce de guidage de rail (5) laquelle coopère avec un rail de guidage s'étendant sur le champ de contrôle (3).

8. Dispositif de contrôle selon l'une quelconque des revendications précédentes, **caractérisé en ce que** le dispositif de contrôle présente un dispositif d'entraînement qui est relié au chariot de contrôle (1).

9. Dispositif de contrôle selon la revendication 8, **caractérisé en ce que** le dispositif d'entraînement présente un dispositif d'entraînement de câble muni d'un câble d'entraînement.

10. Dispositif de contrôle selon la revendication 8, **caractérisé en ce que** le dispositif d'entraînement présente au moins un vérin hydraulique actionnable.

11. Dispositif de contrôle selon l'une quelconque des revendications 8 à 10, **caractérisé en ce que** le dispositif d'entraînement est relié au chariot de contrôle (1) de manière distancée d'une surface de chargement (7) de la plateforme de chargement (6) dans une direction s'étendant perpendiculairement à la première direction de déplacement.

12. Dispositif de contrôle selon la revendication 11, **caractérisé en ce qu'**un écart, perpendiculairement à la première direction de déplacement, entre une liaison active du dispositif d'entraînement est définissable au moyen du chariot de contrôle et de la plateforme de chargement.

13. Dispositif de contrôle selon l'une quelconque des revendications précédentes, **caractérisé en ce que** le chariot de contrôle (1) présente au moins un moteur à balourds à l'aide duquel une amplitude d'oscillation verticale de la plateforme de chargement (6) peut être générée.

14. Procédé de réalisation d'une opération de contrôle destinée à la sécurité de chargement d'unités de chargement transportables pendant une opération de transport, un chariot de contrôle (1) étant déplacé dans une première direction de déplacement sur un champ de contrôle (3) afin de pouvoir examiner le comportement des unités de chargement en fonction des forces d'accélération agissant et afin de déterminer et de vérifier quelles sécurités de chargement sont aptes et nécessaires à quelles unités de chargement, **caractérisé en ce que** les unités de chargement transportables sont disposées sur une plateforme de chargement (6) logée sur le chariot de contrôle (1) et **en ce que** la plateforme de chargement (6) est déviée perpendiculairement à la première direction de déplacement du chariot (1) pendant la réalisation de l'opération de contrôle, afin, pendant la réalisation de l'opération de contrôle, d'exercer des forces d'accélération aussi bien horizontales que verticales sur une unité de chargement se trouvant sur la plateforme de chargement (6).

15. Procédé selon la revendication 14, **caractérisé en ce qu'**une unité de chargement se trouvant sur la plateforme de chargement (6) pendant la réalisation de l'opération de contrôle est fixée sur la plateforme de chargement (6) à l'aide d'au moins un appareil d'arrimage de charges, à savoir à l'aide de moyens d'arrimage de charges, comme par exemple des sangles de serrage ou des moyens d'arrimage, afin de détecter une influence de l'arrimage des charges sur la sécurité de chargement.
